# EUROPÄISCHE PATENTSCHRIFT

(11) **EP 3 272 199 B1**
(45) Veröffentlichungstag und Bekanntmachung des Hinweises auf die Patenterteilung: **25.09.2019**
(21) Anmeldenummer: 17169037.3
(22) Anmeldetag: 02.05.2017
(51) Int. Cl.: A01D 34/74, A01D 34/71, A01D 34/66, A01D 34/835

(54) **MULCHGERÄT ZUR BEARBEITUNG VON AUF EINEM FELD STEHENDEN PFLANZENSTÜMPFEN**
MULCHING DEVICE FOR PROCESSING PLANT STUMPS ON A FIELD
BROYEUR DESTINÉ AU TRAITEMENT DE RÉSIDUS DE CULTURES DANS UN CHAMP

(30) Priorität: 20.07.2016 DE 102016213260; 02.08.2016 DE 102016214256
(43) Veröffentlichungstag der Anmeldung: 24.01.2018
(73) Patentinhaber: Deere & Company, Moline, IL 61265 (US)
(72) Erfinder: Weitenberg, Clemens, 68163 Mannheim (DE); Hungerhoff, Bernd-Clint, 68163 Mannheim (DE); Effsing, Jürgen, 68163 Mannheim (DE); Schlamann, Michael, 68163 Mannheim (DE); Messing, Marco, 68163 Mannheim (DE); Löbbing, Paul, 68163 Mannheim (DE)
(74) Vertreter: Holst, Sönke

(56) Entgegenhaltungen:
- EP-A1- 0 653 152
- DE-A1- 3 934 862
- DE-U1-202016 100 346

## Beschreibung

Die Erfindung betrifft ein Mulchgerät zur Bearbeitung von auf einem Feld stehenden Pflanzenstümpfen nach dem Oberbegriff des Anspruchs 1.

### Stand der Technik

Unterhalb von Erntevorsätzen zur Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*). Derartige Mulchgeräte können auch nach der Ernte an separaten Maschinen eingesetzt werden, um die Pflanzenstümpfe zu bearbeiten.

Üblicherweise werden zur mechanischen Bearbeitung der Maispflanzenstümpfe schneidende, im Betrieb um die Hochachse rotierende (EP 0 423 636 A1, EP 0 653 152 A1, DE 10 2004 020 447 A1) oder um eine leicht nach hinten geneigte Achse drehende (DE 39 34 862 A1) oder um horizontale, quer zur Vorwärtsrichtung orientierte Achsen drehende Werkzeuge (DE 35 15 295 A1) verwendet, oder man zerstört die Stümpfe durch stumpfe, schlagende Werkzeuge, die an der Unterseite von Schneidscheiben von Mäh- und Einzugseinrichtungen (DE 10 2012 206 720 A1) oder an einer separaten Maschine angebracht sind, die nach der Ernte über das Feld gefahren wird (Stoppelmulcher "Mais Topper" der Fa. Major Equipment).

In der als gattungsbildend angesehenen DE 20 2016 100 346 U1 wird ein Pflanzenstoppelkreisschläger beschrieben, bei dem an Ketten aufgehängte Schlagkörper an einer Welle montiert sind, die sich an einem Halter abstützt. Der Halter ist mit einem Oberlenker und einem Unterlenker eines Traktors verbunden und seine Höhe über dem Boden wird durch ein rückwärtiges Tastrad definiert, das an einer Strebe montiert ist, die gegenüber dem Halter in unterschiedlichen Winkelstellungen feststellbar ist, um unterschiedliche Höhenlagen des Halters und somit der Welle einstellen zu können.

In der US 3 984 966 A wird ein Maispflücker mit rückwärtig der Pflückeinheiten angeordneten, um die Hochachse rotierenden Stoppelhäckslern beschrieben. Die untereinander starr verbundenen Gehäuse der Stoppelhäcksler sind mit ihren vorderen Seiten um die Querachse schwenkbar am Rahmen des Pflückers angelenkt und an ihren hinteren Enden durch einen Hydraulikzylinder und ein damit gekoppeltes Seil höhenverstellbar. Zudem werden sie durch eine Feder abgestützt. Bei angehobenem Schrägförderer des Mähdreschers kann demnach die Neigung des Stoppelhäckslers zwischen einer vertikalen Drehachse, die bei normal wachsendem Erntegut eingestellt werden soll, und einer nach vorn und unten geneigten Drehachse verstellt werden, die bei schwerem Wachstum verwendet werden soll.

Die Drehachsen der um die Hochachse rotierenden, schneidenden oder schlagenden Werkzeuge sind im Betrieb genau senkrecht angeordnet oder etwas nach vorn und oben geneigt. Das hat zur Folge, dass der Pflanzenstumpf genau einmal mit dem Werkzeug zusammen wirkt, denn nachdem der Pflanzenstumpf durch das Werkzeug getroffen ist, wird er umknicken oder abgeschnitten. Danach sind seine im Boden verbleibenden Reste tiefer als das Werkzeug, sodass es keine Möglichkeit gibt, ihn mit dem Werkzeug noch ein zweites Mal zu bearbeiten. Die Wirkung der Werkzeuge ist somit relativ begrenzt und es bleiben relativ große Stücke der Pflanzenstümpfe auf dem Feld zurück, die unter ungünstigen Umständen dem Maiszünsler zur Überwinterung dienen.

### Aufgabe

Es wäre demnach wünschenswert, den Zerkleinerungsgrad der Pflanzenstümpfe zu vergrößern.

### Lösung

Diese Aufgabe wird erfindungsgemäß durch die Lehre der Patentansprüche 1 und 5 gelöst, wobei in den weiteren Patentansprüchen Merkmale aufgeführt sind, die die Lösung in vorteilhafter Weise weiterentwickeln.

Ein Mulchgerät zur Bearbeitung von auf einem Feld stehenden Pflanzenstümpfen ist in einer Vorwärtsrichtung über ein Feld bewegbar und mit einem in Drehung versetzbaren Werkzeug zur Bearbeitung der Pflanzenstümpfe ausgestattet, dessen Drehachse im Betrieb nach oben und hinten geneigt ist.

Da die Drehachse nicht genau vertikal oder nach vorn, sondern nach hinten geneigt ist, erfolgt die erste Bearbeitung der Pflanzenstümpfe durch das Werkzeug bei ersten Auftreffen des Werkzeugs auf einen Pflanzenstumpf in einer ersten Höhe, die durch den Neigungswinkel der Drehachse nach hinten, die Höhe der Drehachse über dem Boden, den Durchmesser des Werkzeugs und den seitlichen Versatz zwischen der Drehachse und dem Pflanzenstumpf bedingt ist. Der Pflanzenstumpf wird demnach ein erstes Mal bearbeitet. Wird das Mulchgerät nun weiter in der Vorwärtsrichtung über das Feld bewegt, kann der Pflanzenstumpf zumindest noch ein zweites Mal durch das Werkzeug bearbeitet werden, wenn er rückwärtig der Drehachse mit dem Werkzeug in Berührung kommt. Dieser Vorgang findet aufgrund der Neigung der Drehachse in einer zweiten Höhe statt, die kleiner als die erste Höhe ist. Wenn das Werkzeug die Pflanzenstümpfe nicht nur an seinem äußeren Ende, sondern auch zwischen der Drehachse und dem äußeren Ende bearbeiten kann (z.B. wie ein Rasenmähermesser, d.h. mit einer radialen Schneidkante, ausgeführt ist oder mehrere, unterschiedlich lange Arme mit endseits befestigten Schlagkörpern umfasst), kann es sogar mehr als zweimal mit den Pflanzenstümpfen zusammenwirken.

Das Werkzeug kann als stumpfes, schlagendes und/oder schneidendes Werkzeug ausgeführt sein. Beispielsweise kann ein schneidendes Werkzeug höher und/oder radial weiter außen als ein stumpfes, schlagendes Werkzeug angeordnet werden.

Das Werkzeug ist mit einer es antreibenden Welle verbunden, die um eine sich quer zur Vorwärtsrichtung und horizontal erstreckende Achse frei drehbar gelagert ist und die Welle durch Führungsmittel gegenüber dem Boden in die nach oben und hinten geneigte Betriebsstellung ausrichtbar ist. Alternativ oder zusätzlich kann die Welle mit dem Werkzeug auch höhenverstellbar gelagert sein, insbesondere durch eine Parallelogrammaufhängung. Dadurch folgt das Werkzeug selbsttätig der Kontur des Bodens und bewegt sich um die Achse gegenüber dem Boden oder wird parallel dazu nach oben und unten verschoben. Die Führungsmittel umfassen eine auf dem Boden laufende Kufe, die mit der Welle gekoppelt ist. Die Welle ist durch eine Feder oder ein Gewicht oder einen fremdkraftbetätigten Aktor nach vorn und unten vorgespannt, um das Werkzeug in die gewünschte Position zu verbringen.

Die Kufe und/oder ein mit ihr gekoppeltes, rückwärtiges Abdeckblech kann mit einer Öffnung zum Auswerfen von Pflanzenresten ausgestattet sein.

Das vorgeschlagene Mulchgerät kann an einem Erntevorsatz zur Maisernte angebracht werden, d.h.an einem Maispflücker oder einem Mähvorsatz zur Ernte ganzer Maispflanzen. An einem Erntevorsatz können mehrere Werkzeuge über die Breite des Erntevorsatzes verteilt und separat in der im vorigen Absatz beschriebenen Weise gegenüber dem Boden ausrichtbar sein. Eine grobe Höhenführung des Erntevorsatzes kann durch eine an sich bekannte, auf Fühlern basierende Höhensteuerung, mit welcher der Erntevorsatz mit dem Einzugskanal gegenüber der Erntemaschine um eine seitlich verlaufende Achse verschwenkt wird, erfolgen. Das Mulchgerät kann auch an einem separaten Gerät angebracht werden, das nach der Ernte über das Feld bewegt wird, um die Pflanzenstümpfe zu bearbeiten.

### Ausführungsbeispiel

In den Zeichnungen werden mehrere nachfolgend näher beschriebene Ausführungsbeispiele dargestellt. Es zeigen:
- Fig. 1: eine Erntemaschine mit einem daran angebrachten Erntevorsatz, an dem ein Mulchgerät angebracht ist,
- Fig. 2: eine Seitenansicht des Erntevorsatzes bei der Ernte,
- Fig. 3: eine perspektivische Ansicht des Mulchgeräts,
- Fig. 4: eine Seitenansicht eines Erntevorsatzes mit einer zweiten Ausführungsform eines Mulchgeräts,
- Fig. 5: eine perspektivische Ansicht einer dritten Ausführungsform eines Mulchgeräts,
- Fig. 6: eine perspektivische Ansicht einer vierten Ausführungsform eines Mulchgeräts,
- Fig. 7: eine Seitenansicht einer fünfte Ausführungsform des Mulchgeräts,
- Fig. 8: eine Seitenansicht eines Maispflückers mit einer sechsten Ausführungsform des Mulchgeräts,
- Fig. 9: eine perspektivische Ansicht eines Werkzeugs zur Verwendung in einem Mulchgerät, und
- Fig. 10: eine perspektivische Ansicht eines anderen Werkzeugs zur Verwendung in einem Mulchgerät.

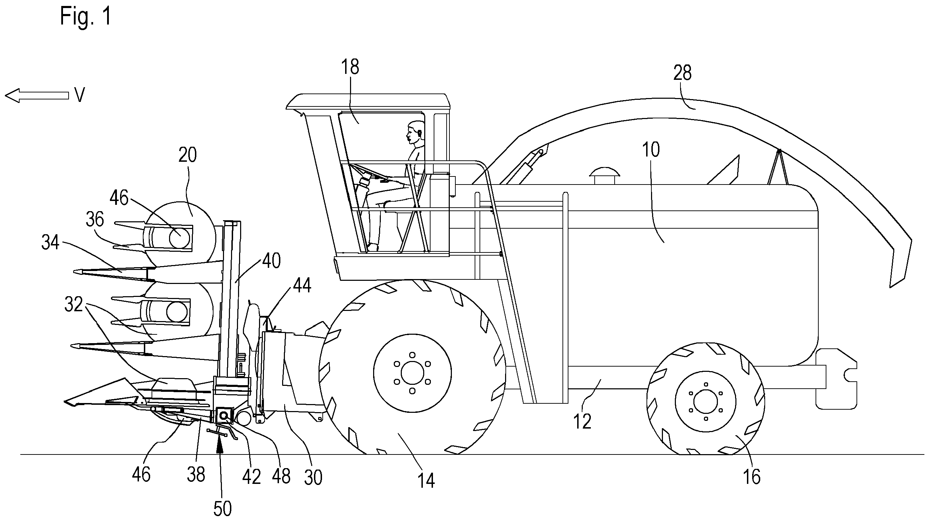

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels eines Erntevorsatzes 20 vom Boden aufgenommenes Gut, z. B. Mais, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz hydraulisch heruntergeschwenkt werden, so dass sie beim Erntebetrieb parallel zum Mittelteil 38 verlaufen. Anschließend können sie wieder hinauf geschwenkt werden. Die Zeichnung zeigt die Seitenteile 40 in hochgeschwenktem Zustand. Am Mittelteil 38 sind in der vorliegenden Ausführungsform vier Einzugs- und Mähtrommeln 32 angebracht, während an beiden Seitenteilen 40 jeweils zwei Einzugs- und Mähtrommeln 32 angebracht sind. Der Erntevorsatz 20 ist in an sich bekannter Weise mit Halmteilern 36, den Einzugs- und Mähtrommeln 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie dem Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines am Mittelteil 38 und eines an jedem Seitenteil 40 angeordnet ist. An der Vorderseite des unteren Querträgers 42 sind Getriebegehäuse 46 angeschraubt, die zum Antrieb jeweils einer Einzugs- und Mähtrommel 32 dienen. Eine Antriebswelle 48 zum Antrieb der Einzugs- und Mähtrommeln 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise untergriffen werden und zur Befestigung des Erntevorsatzes 20 an der Erntemaschine 10 dienen. Er ist durch sich vertikal erstreckende Träger und Verbindungsbleche mit dem unteren Querträger 42 verbunden. Der Trägerrahmen mit den Querträgern 42, 44 und den sich vertikal erstreckenden Trägern und Verbindungsblechen bildet somit ein Skelett des Erntevorsatzes 20, das alle weiteren Elemente des Erntevorsatzes 20 trägt.

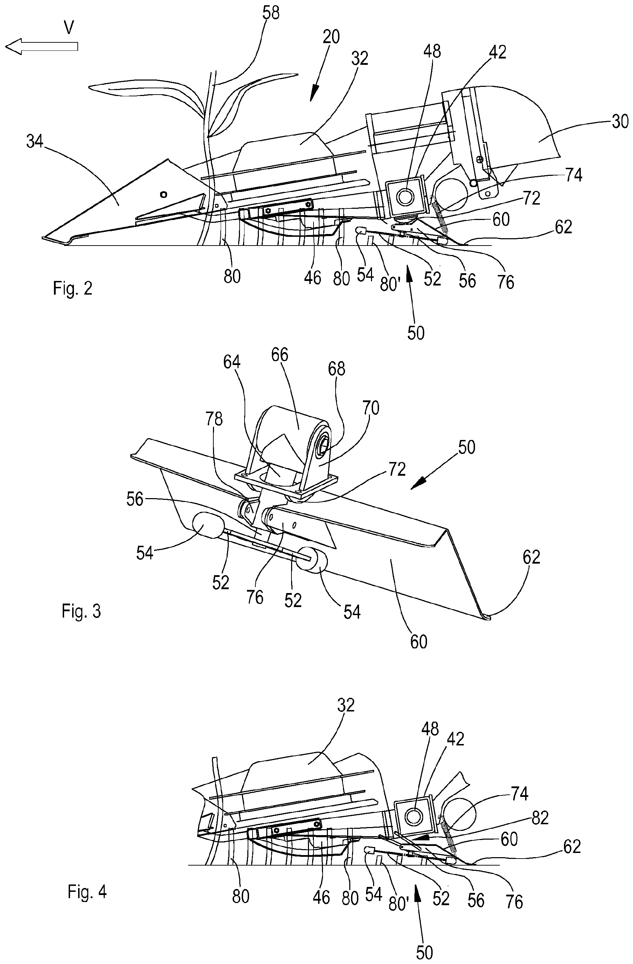

Die Figur 2 zeigt den Erntevorsatz 20 in einer Position, die er beim Ernten einnimmt, wofür das Einzugsgehäuse 30 durch einen Aktor (nicht gezeigt) um die Drehachse der Häckseltrommel aus der in Figur 1 gezeigten Transportposition abgesenkt wird. Dieser Aktor kontrolliert auch die Höhe des Erntevorsatzes 20 über dem Boden, in einer an sich bekannten, auf Fühlern basierenden Weise.

Rückwärtig jeder Einzugs- und Mähtrommel 32 ist jeweils ein Mulchgerät 50 angebracht. Das Mulchgerät 50 ist mit seiner Drehachse in seitlicher Richtung Breite rückwärtig von der Drehachse der zugehörigen Einzugs- und Mähtrommel 32 angeordnet. Dort laufen im normalen Erntebetrieb die Pflanzen ein. Falle eine Einzugs- und Mähtrommel 32 mehrere Pflanzenreihen aberntet, können ihr mehrere Mulchgeräte 50 zugeordnet werden, deren Drehachsen rückwärtig der zu erwartenden Einlaufstellen der Pflanzenreihen angeordnet sind. Es wäre auch denkbar, die Mulchgeräte 50 lückenlos oder mit kleinen Lücken über die ganze Arbeitsbreite des Erntevorsatzes 20 zu verteilen.

Es wird nun auf die Figuren 2 und 3 verwiesen. Das Mulchgerät 50 umfasst zwei sich diametral gegenüber liegende Werkzeuge 54, die über radiale Arme 52 starr mit einer mittigen Welle 56 verbunden sind. Anstelle starrer Arme 52 könnten die Werkzeuge 54 auch durch Ketten oder andere, flexible Elemente mit der Welle 56 verbunden sein. Die Werkzeuge 54 sind als stumpfe Schlagkörper ausgeführt, d.h. kugel- oder zigarrenförmig geformt. Als Werkzeuge 54 könnten alternativ oder zusätzlich schneidende Messer verwendet werden, wie sie üblicherweise unter Maispflückern eingebaut werden. Diese Messer können starr oder pendelnd mit der Welle 56 verbunden werden.

Die Welle 56 ist an ihrem unteren Ende mit den Armen 52 verbunden und an ihrem oberen Ende in einem Getriebe 66 gelagert. Durch eine Hohlwelle 68 des Getriebes 66 erstreckt sich die Antriebswelle 48 und ist formschlüssig mit der sechseckigen Hohlwelle 68 gekoppelt. Das Getriebe 66 enthält Antriebselemente (nicht gezeigt), welche die Hohlwelle 68 mit der Welle 56 antriebsmäßig verbinden, z.B. Kegelräder. Das Getriebe 66 ist gegenüber der Antriebswelle 48 und dem unteren Querträger 42 um die Achse der Antriebswelle 48 frei schwenkbar gelagert.

Weiterhin ist eine das Getriebe 66 von den beiden Seiten her umschließende Konsole 70 starr mit dem unteren Querträger 42 verbunden. Ein unteres, die beiden seitlich am Getriebe 66 anliegenden Bleche der Konsole 70 verbindendes Blech ist an seiner Unterseite mit einem Anschlagelement 72 verbunden, das im Zusammenwirken mit einem Abdeckblech 60 dazu dient, den Bewegungsbereich der Welle 56 und somit der Werkzeuge 54 einzuschränken und Kollisionen mit anderen Teilen des Erntevorsatzes 20 zu vermeiden.

Am Gehäuse des Getriebes 66 ist eine Hohlachse 64 angebracht, welche die Welle 56 zwischen dem Getriebe 66 und einem unteren, geringfügig oberhalb der Arme 52 liegenden Ende konzentrisch umschließt. Die Hohlachse 64 ist mit dem Getriebe 66 und der Welle 56 frei gegenüber dem unteren Querträger 42 um die Längsachse der Antriebswelle 48 schwenkbar. An ihrem unteren Ende trägt die Hohlachse 64 einen Flansch 78, an dem eine Halterung 76 angebracht ist. Die Halterung 76 ist starr mit dem Abdeckblech 60 verbunden. Das Abdeckblech 60 erstreckt sich über die Breite des Mulchgeräts 50 und ist etwas breiter als der Durchmesser des von den Werkzeugen beschriebenen Hüllkreises. Das Abdeckblech 60 erstreckt sich in Vorwärtsrichtung V von der Mitte der Hohlachse 64 und von dort schräg nach hinten und unten bis zu einer rückwärtigen Kufe 62, die auf dem Boden aufliegt. Eine (Druck-) Feder 74 ist zwischen dem Tragrahmen des Erntevorsatzes 20 und dem Abdeckblech 60 angeschlossen und drückt das Abdeckblech 60 nach unten. Zur Anpassung an die Ebenheit des Bodens kann die Kufe 62 gegenüber dem Abdeckblech 60 (und/oder das Abdeckblech 60 gegenüber der Hohlachse 64) verstellbar sein, um die Werkzeuge 54 in ihrer rückwärtigen Stellung bei ebenerem Boden weiter nach unten zu stellen als bei unebenerem Boden. Die Feder 74 könnte auch durch einen Aktor ersetzt oder unterstützt werden, der das Abdeckblech mit einer vorbestimmten Kraft über den Boden führt und dazu dienen kann, es bei Bedarf auszuheben, sei es automatisch, z.B. bei Nichtbenutzung des Mulchgeräts 50 oder im Vorgewende oder bei Rückwärtsfahrt, oder durch den Bediener veranlasst. Hierzu wird auf die Offenbarung der DE 10 2017 003 739 A1 verwiesen.

Nach alledem ergibt sich folgende Wirkungsweise: Die Feder 74 oder der Aktor drückt das Abdeckblech 60 und somit auch die Kufe 62 nach unten, bis diese Bodenkontakt hat. Das Abdeckblech 60 dreht über die Halterung 76, den Flansch 78 und die Hohlachse 64 auch das Getriebe 66 um die Längsachse der Antriebswelle 48. Diese Drehung wird über das Getriebe 66, die Welle 56 und die Arme 52 schließlich auch auf die Werkzeuge 54 übertragen. Die durch die Welle 56 definierte Drehachse, um welche die Werkzeuge 54 im Betrieb rotieren, ist, wie in der Figur 2 gezeigt, nach hinten und oben geneigt. Dadurch erreicht man, dass die Pflanzenstümpfe 80 der geernteten Pflanzen 58, deren Höhe zunächst durch die Höhe der Schneidscheiben der Einzugs- und Mähtrommeln 32 über dem Boden vorgegeben ist, im vorderen Bereich des Mulchgeräts 50 ein erstes Mal durch ein Werkzeug 54 erfasst werden. Die dann noch im Boden verbleibenden, bereits bearbeiteten und gekürzten (abgeschlagenen) Pflanzenstümpfe 80' werden anschließend noch ein zweites Mal im rückwärtigen Bereich des Mulchgeräts 50 durch eines der Werkzeuge 54 bearbeitet und in Bodennähe abgeschlagen. Demnach wird die Bearbeitungsqualität der Pflanzenstümpfe wesentlich verbessert. Um die Wirkung noch weiter zu verbessern, könnte man die vorlaufenden Kanten der Arme 52 mit Schneiden ausstatten. Die beschriebene Bodenanpassung erfolgt für jedes Mulchgerät 50 des Erntevorsatzes 20 getrennt voneinander.

Ein weiterer Vorteil der frei pendelnden Aufhängung der Welle 56 und der Werkzeuge 54 und ihrer bodenkonturenfolgenden Positionssteuerung mittels der Kufe 62 liegt darin, dass die Werkzeuge 54 bei geeigneter Drehrichtung der Welle 56, in dem Fall, dass sie sich in unbeabsichtigter Weise in den Boden oder einen Erdhaufen eingearbeitet haben, aufgrund des in diesem Fall entstehenden Drehmoments, das die Werkzeuge 54 aufgrund des Antriebs über die Welle 56 auf den Boden ausüben, die Welle 56 um die Längsachse der Antriebswelle 48 nach hinten und oben drehen und sich somit selbsttätig aus dem Boden befreien. Für den Fall, dass keine Bearbeitung der Pflanzenstümpfe 80 beabsichtigt sein sollte, kann das Mulchgerät 50 vom Erntevorsatz 20 abgebaut werden oder die Welle 56 wird durch eine Kupplung o.ä. von der Antriebswelle 48 getrennt oder die Arme 52 von der Welle 56 abgebaut.

Bei der zweiten Ausführungsform des Mulchgeräts 50 nach Figur 4 ist die Welle 56 nicht um die Längsachse der Antriebswelle 48 schwenkbar, sondern durch eine Parallelogrammanordnung 82 mit zwei Lenkern, die jeweils um horizontal und quer zur Vorwärtsrichtung verlaufende Achsen einerseits schwenkbar am Rahmen des Erntevorsatzes 20 oder am Getriebe 46 oder an einer anderen, geeigneten, mit dem Erntevorsatz 20 gekoppelten Stelle und andererseits an der Halterung 76 angelenkt sind, in sich parallel höhenveränderlich am Erntevorsatz 20 abgestützt. Die Welle 56 kann durch einen dem jeweiligen Mulchgerät 50 zugeordneten Elektro- oder Hydromotor oder einen vom Getriebe 46 oder der Antriebswelle 48 abgeleiteten, mechanischen Antriebsstrang angetrieben werden. Auch hier wird die Drehrichtung der Welle 56 derart gewählt, dass das Werkzeug 54 sich bei Überlast gegen die Kraft der Feder 74 aufgrund des Antriebsmoments selbsttätig aus dem Boden herausarbeitet. Dieser Vorteil lässt sich übrigens auch erreichen, wenn die Drehachse der Welle 56 nicht, wie in den Figuren gezeigt, nach hinten und oben geneigt ist, sondern kann auch bei nach vorn und oben oder zur Seite geneigter Drehachse erzielt werden.

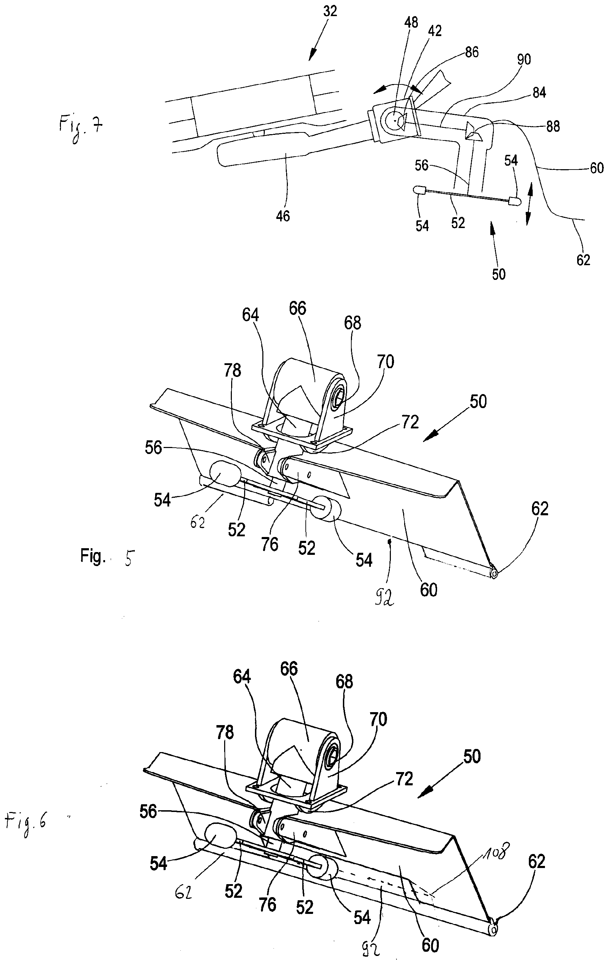

Die Figur 5 zeigt eine dritte Ausführungsform des Mulchgeräts 50, die im Wesentlichen jener nach Figur 3 entspricht. Im Unterschied dazu erstreckt sich jedoch die aus einem Rohr gebildete Kufe 62 nicht über die gesamte Breite des Abdeckblechs 60, sondern nur an dessen beiden seitlichen Rändern. Im mittleren Bereich des Abdeckblechs 60 verbleibt demnach eine untere, bodennahe Öffnung 92, durch welche die zerkleinerten Pflanzenteile nach hinten ausgeworfen werden können und sich nicht unterhalb des Abdeckblechs 60 ansammeln. Das Abdeckblech 60 der Figur 5 mit der Öffnung 92 kann auch bei der Ausführungsform nach Figur 4 verwendet werden.

Die Figur 6 zeigt eine vierte Ausführungsform eines Mulchgeräts 50, die im Wesentlichen jener nach Figur 5 entspricht. Im Unterschied dazu erstreckt sich jedoch die aus einem Rohr gebildete Kufe 62 über die gesamte Breite des Abdeckblechs 60, während im mittleren Bereich des Abdeckblechs 60 unmittelbar oberhalb der sich lückenlos über die Breite des Abdeckblechs 60 erstreckenden Kufe 62 ein Ausschnitt 92 vorgesehen ist. Dieser Ausschnitt 92 kann nach oben und hinten hin durch eine optionale Klappe 108 abgedeckt werden, die sich an den oberen Rand des Ausschnitts 92 nach hinten anschließt und flacher als das Abdeckblech 60 angestellt ist. Die Klappe 108 kann starr oder an ihrem oberen Ende um eine quer verlaufende Achse schwenkbar und verstellbar am Abdeckblech 60 angelenkt werden. Die Klappe 108 verhindert, dass Pflanzenreste nach oben und hinten hin abgeschleudert werden und die Erntemaschine 10 oder die Räder 14 treffen. Im mittleren Bereich des Abdeckblechs 60 verbleibt demnach oberhalb der Kufe 62 die untere, bodennahe Öffnung 92, durch welche die zerkleinerten Pflanzenteile nach hinten ausgeworfen werden können und sich nicht unterhalb des Abdeckblechs 60 ansammeln. Das Abdeckblech 60 der Figur 6 mit der Öffnung 92 kann auch bei der Ausführungsform nach Figur 4 verwendet werden. Auch können die Ausführungsformen der Figuren 5 und 6 kombiniert werden, d.h. die Kufe 62 der Figur 6 wie in Figur 5 mittig unterbrochen sein.

Die fünfte Ausführungsform nach Figur 7 entspricht etwa jener nach den Figuren 1 bis 3 oder 5, jedoch ist die Welle 56 gegenüber dem Querträger 42 nach hinten versetzt und wird durch die Antriebswelle 48 über ein erstes Kegelradgetriebe 86, eine sich von diesem nach hinten erstreckende Welle 90 und ein zweites Kegelradgetriebe 88 angetrieben, die sich innerhalb eines Gehäuses 84 befinden. Das Gehäuse 84 ist gegenüber dem Querträger 42 frei um die Längsachse der Antriebswelle 48 drehbar und über das Abdeckblech 60 mit der Kufe 62 verbunden. Die Bereitstellung des Drehmoments zur Ausrichtung des Mulchgeräts 50 in die dargestellte Position kann, wie gezeigt, nur durch das Gewicht des Gehäuses 84 und des Getriebes 88 bereitgestellt werden, oder man verwendet zusätzlich eine Feder 74 wie in den anderen, gezeigten Ausführungsbeispielen. Es sei noch angemerkt, dass man bei der Ausführungsform nach Figur 6 das Gehäuse 84 (statt am Querträger 42) am Getriebe 46 um eine horizontale, quer zur Vorwärtsrichtung verlaufende Achse frei schwenkbar anlenken und die Welle 90 durch eine Abtriebswelle des Getriebes 46 antreiben könnte.

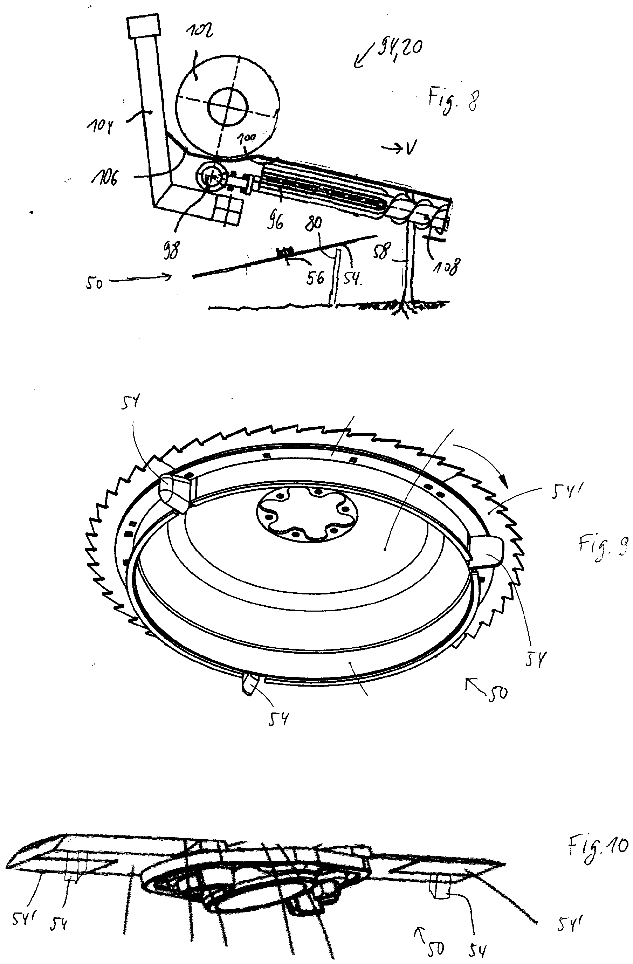

Die Figur 8 zeigt schließlich eine sechste Ausführungsform eines Mulchgeräts 50, das unterhalb eines Erntevorsatzes 20 in Form eines Maispflückers 94 angeordnet ist, der in an sich bekannter Weise mit einem Rahmen 104, einer am Rahmen 104 abgestützten Querförderschnecke 102, einer darunter angeordneten Mulde 106, einem vor der Querförderschnecke 102 angeordneten Abstreifblech 100, in dem ein Pflückspalt gebildet ist, und einem Paar an Pflückwalzen 96 ausgestattet ist, die über ein Getriebe 98 angetrieben werden und an ihren vorderen Enden mit Einzugsschnecken 108 versehen sind. Auch hier ist das Werkzeug 54 um eine Welle 56 antreibbar, deren Achse sich nach hinten und oben erstreckt. Bei dieser Ausführungsform sind die Werkzeuge 54 als sich radial erstreckende Schneiden ausgeführt, wie bei sie Stängelhäckslern von Maispflückern gebräuchlich sind (vgl. DE 10 2014 213 419 A1), obwohl zusätzlich auch tangentiale Schneiden vorgesehen sein können. Die Werkzeuge 54, deren Hüllkreis sich mit dem Pflückspalt überdeckt, dienen bei dieser Ausführungsform einerseits dazu, insbesondere in ihrem vor der Welle 56 liegenden Bereich, die von den Pflückwalzen 96 nach unten abgeförderten Stängel der Pflanzen 58 zu zerhäckseln, während sie in ihrem rückwärtig der Welle 56 liegenden Bereich die im Boden verbliebenen Stoppeln 80 der Pflanzen 58 zerkleinern. Die Werkzeuge 54 wirken demnach aufgrund der Orientierung der Drehachse der Welle 56 auch hier mehrfach mit den Stängeln der Pflanzen 58 zusammen. Der Antrieb der Welle 56 kann bei der Ausführungsform nach Figur 8 analog zur Figur 7 vom Getriebe 98 her über ein Winkelgetriebe 88 erfolgen. Schließlich sei angemerkt, dass die Welle 54 beim Pflücker 94 der Figur 7 gegenüber dessen Rahmen 104 starr angeordnet oder die bodenkopierende Anordnung der Werkzeuge 54 der Ausführungsformen der Figuren 1 bis 7 auch bei der Ausführungsform nach Figur 8 vorgesehen werden kann.

Die Figuren 9 und 10 zeigen zwei mögliche Ausführungsformen der Werkzeuge 54 der Mulchgeräte 50, wie sie in den zuvor gezeigten Ausführungsformen der Figuren 1 bis 8 Verwendung finden können. Bei der Ausführungsform nach Figur 9 ist ein oberes Werkzeug 54' in Form eines Kreissägemessers vorgesehen, unter dem untere Werkzeuge 54 in Form von stumpfen Schlagkörpern verteilt sind. Bei der Ausführungsform nach Figur 10 sind obere Werkzeuge 54' in Form von sich radial erstreckende Schneiden vorgesehen, wie bei sie Stängelhäckslern von Maispflückern gebräuchlich sind (vgl. DE 10 2014 213 419 A1), unter denen untere Werkzeuge 54 in Form von stumpfen Schlagkörpern angebracht sind. Die dargestellte Anordnung von oberen, schneidenden Werkzeugen 54', die in radialer Richtung über die unteren Werkzeuge 54 hinausragen, hat bei der nach hinten und oben geneigten Drehachse der Mulcher 50 den Vorteil, dass die schneidenden Werkzeuge 54' an der Vorderseite des Mulchers 50 zuerst mit den noch stehenden Pflanzen bzw. ihren Stoppeln zusammenwirken und sie verkürzen. Im rückwärtigen Bereich des Mulchers 50 werden die verbleibenden Pflanzenstängel anschließend durch die unteren, stumpfen Werkzeuge 54 zerlegt. Dabei bleiben die schneidenden Werkzeuge 54' in größerem Abstand vom Erdboden und kommen demnach kaum damit in Berührung, was ihre Lebensdauer vergrößert.

## Patentansprüche

1. Mulchgerät (50) zur Bearbeitung von auf einem Feld stehenden Pflanzenstümpfen (80), das in einer Vorwärtsrichtung (V) über ein Feld bewegbar und mit einem um eine im Betrieb nach oben und hinten geneigte Drehachse in Drehung versetzbaren Werkzeug (54, 54') zur Bearbeitung der Pflanzenstümpfe (80) ausgestattet ist, wobei das Werkzeug (54, 54') mit einer es antreibenden Welle (56) verbunden ist, die um eine sich quer zur Vorwärtsrichtung und horizontal erstreckende Achse frei drehbar oder höhenveränderlich gelagert ist und die Welle (56) durch Führungsmittel gegenüber dem Boden ausrichtbar ist, **dadurch gekennzeichnet, dass** die Führungsmittel eine auf dem Boden laufende Kufe (62) umfassen, die mit der Welle (56) gekoppelt ist, und dass die Welle (56) durch eine Feder (74) oder einen Aktor nach vorn und unten vorgespannt ist.

2. Mulchgerät (50) nach Anspruch 1, wobei das Werkzeug (54, 54') als stumpfes, schlagendes oder schneidendes Werkzeug (54, 54') ausgeführt ist.

3. Mulchgerät (50) nach Anspruch 2, wobei ein schneidendes Werkzeug (54') höher und/oder radial weiter außen als ein stumpfes, schlagendes Werkzeug (54) angeordnet ist.

4. Mulchgerät (50) nach einem der Ansprüche 1 bis 3, wobei die Kufe (62) und/oder ein mit ihr gekoppeltes, rückwärtiges Abdeckblech (60) mit einer Öffnung (92) zum Auswerfen von Pflanzenresten ausgestattet ist.

5. Erntevorsatz (20) zur Maisernte, mit einem Mulchgerät (50) nach einem der vorhergehenden Ansprüche.

6. Erntevorsatz (20) nach Anspruch 5, wobei mehrere Werkzeuge (54, 54') über die Breite des Erntevorsatzes (20) verteilt und separat gegenüber dem Boden ausrichtbar sind.

7. Erntevorsatz (20) nach Anspruch 5 oder 6, wobei die Welle (56) mit einer in einem mehrere Mäh- und Einzugseinrichtungen (32) abstützenden Querträger (42) angeordneten Antriebswelle (48) oder einem Getriebe (46) zum Antrieb einer Mäh- und Einzugseinrichtung (32) antriebsmäßig gekoppelt ist.

## Claims

1. Mulching device (50) for processing plant stumps (80) on a field, which can be moved over a field in a forward direction (V) and is equipped with a tool (54, 54') which can be set in rotation about an axis of rotation inclined upwards and rearwards during operation in order to process the plant stumps (80), the tool (54, 54') being connected to a shaft (56) driving the same, which is mounted such that it can be rotated freely about an axis extending transversely with respect to the forward direction and horizontally or is height-adjustable, and the shaft (56) can be aligned with respect to the ground by a guide means, **characterized in that** the guide means comprise a skid (62) running on the ground, which is coupled to the shaft (56), and **in that** the shaft (56) is preloaded forwards and downwards by a spring (74) or an actuator.

2. Mulching device (50) according to Claim 1, wherein the tool (54, 54') is designed as a blunt striking or cutting tool (54, 54'),

3. Mulching device (50) according to Claim 2, wherein a cutting tool (54') is arranged higher and/or radially further out than a blunt striking tool (54) .

4. Mulching device (50) according to one of Claims 1 to 3, wherein the skid (62) and/or a rear covering plate (60) coupled thereto is equipped with an opening (92) for ejecting plant residues.

5. Harvesting head (20) for harvesting maize, having a mulching device (50) according to one of the preceding claims.

6. Harvesting head (20) according to Claim 5, wherein a plurality of tools (54, 54') are distributed over the width of the harvesting head (20) and can be aligned separately with respect to the ground.

7. Harvesting head (20) according to Claim 5 or 6, wherein the shaft (56) is driving coupled to a drive shaft (48) arranged in a cross-member (42) supporting a plurality of mowing and intake devices (32) or a gearbox (46) for driving a mowing and intake device (32).

## Revendications

1. Appareil de broyage (50) destiné au traitement de résidus de végétaux (80) dans un champ, qui est déplaçable dans une direction avant (V) dans un champ et qui est équipé d'un outil (54, 54') destiné au traitement de résidus de végétaux (80) qui peut être mis en rotation autour d'un axe de rotation incliné vers le haut et vers l'arrière pendant le fonctionnement, dans lequel l'outil (54, 54') est relié à un arbre (56) qui l'entraîne, qui est supporté de façon librement rotative ou réglable en hauteur autour d'un axe s'étendant transversalement à la direction avant et horizontalement et l'arbre (56) peut être orienté par rapport au sol par des moyens de guidage, **caractérisé en ce que** les moyens de guidage comprennent un patin (62) glissant sur le sol, qui est couplé à l'arbre (56), et **en ce que** l'arbre (56) est précontraint vers l'avant et vers le bas au moyen d'un ressort (74) ou d'un actionneur.

2. Appareil de broyage (50) selon la revendication 1, dans lequel l'outil (54, 54') est formé par un outil (54, 54') émoussé, battant ou tranchant.

3. Appareil de broyage (50) selon la revendication 2, dans lequel un outil tranchant (54') est disposé plus haut et/ou radialement plus à l'extérieur qu'un outil émoussé battant (54).

4. Appareil de broyage (50) selon l'une quelconque des revendications 1 à 3, dans lequel le patin (62) et/ou une tôle de recouvrement arrière (60) couplée à celui-ci est muni(e) d'une ouverture (92) permettant d'éjecter des résidus de végétaux.

5. Tête de récolte (50) pour la récolte du maïs, avec un appareil de broyage (50) selon l'une quelconque des revendications précédentes.

6. Tête de récolte (20) selon la revendication 5, dans laquelle plusieurs outils (54, 54') sont répartis sur la largeur de la tête de récolte (20) et peuvent être orientés séparément par rapport au sol.

7. Tête de récolte (20) selon une revendication 5 ou 6, dans laquelle l'arbre (56) est cinématiquement couplé à un arbre d'entraînement (48) disposé dans une traverse (42) supportant plusieurs dispositifs de fauchage et d'aspiration (32) ou à un engrenage (46) pour l'entraînement d'un dispositif de fauchage et d'aspiration (32).
